# EUROPEAN PATENT APPLICATION

(11) **EP 1 571 846 A2**
(43) Date of publication of application: **07.09.2005**
(21) Application number: 05004574.9
(22) Date of filing: 02.03.2005
(51) Int. Cl.: H04N 7/173

(54) **Apparatus and method for controlling broadcast channel access**

(30) Priority: 03.03.2004 KR 2004014438; 31.08.2004 KR 2004069068
(71) Applicant: LG ELECTRONICS INC., Seoul 150-721 (KR)
(72) Inventor: Cho, Gwang Whan, Gumi-si Gyeongsangbuk-do (KR); Jun II, Jin, Gumi-si Gyeongsangbuk-do (KR); Park, Ki Boung 107-1102, Ubang Sincheonji Apt. 710, Chilgok-gun, Gyeongsangbuk-do (KR); Kang, Byung Kyu, 205-1.301, Ubang Sincheonji Town, Chilgok-gun Gyeongsangbuk-do (KR); Jo, Jai Hyun, Igok-dong Dalseo-gu Daegu (KR); Jeong, Seok Hwa, Gumi-si Gyeongsangbuk-do (KR)
(74) Representative: Schorr, Frank Jürgen

(57) **Abstract**

An apparatus and methods for controlling broadcast channel access in a video display 3 are provided. The apparatus includes at least one user input unit 7 configured to preset one or more viewable-channel numbers and turn on/off a broadcast channel access mode of the video display 3, a memory 9 configured to store the preset viewable channel numbers, a controller 4 configured to output a channel selection control signal for selecting only the stored channel numbers when a broadcast channel access mode is turned on, and a channel selector 1 configured for selecting only a required channel out of currently-received broadcast channels according to the channel selection control signal. The apparatus may also include a second user input unit 8 configured to input a required channel number, and a display unit 3 configured to display a video signal of the selected channel.

## Description

The invention relates to a broadcast channel access control apparatus and method.

Recently, viewers can view various broadcasts by using a multi-channel broadcast system that transmits various broadcast contents, such as a cable broadcast, a high-definition digital broadcast, a satellite broadcast, over a plurality of channels. However, when a broadcast contains content harmful to children and juveniles, such as violent content or adult-only content, adult viewers may desire a device capable of blocking the broadcast containing such harmful content.

Accordingly, in order to prevent such harmful broadcast content from being viewed by children and juveniles, the U.S. Federal Communications Commission (FCC) has introduced a violence chip (V-chip) function related to a program rating. The program rating classifies a broadcast program into six classes so as to set a program viewing suitability degree according to age or maturity of viewers. The FCC requires that virtually all currently manufactured TVs include the V-chip technology. However, other countries may not require the V-chip technology.

The V-chip function makes it possible to restrict viewing by viewers according to the program rating. The V-chip function is also called a "parental lock" in that it makes it possible for parents to physically prevent indiscriminate viewing by their children.

The V-chip function can be embodied in such a way that a broadcasting station transmits program rating information through a 21^{st} scan line of a horizontal frequency out of a broadcast signal. Upon reception of the program rating information from the broadcasting station, a TV (television) determines whether or not the received program rating is higher than a preset rating. If the received program rating is higher than a preset rating, the TV blocks a corresponding broadcast signal.

However, for a broadcast blocking method using the V-chip technology, a broadcasting station should transmit program rating information through a broadcast signal, and a TV should be equipped with the V-chip. Accordingly, the broadcast blocking method using the V-chip has the problems that it complicates the overall broadcast blocking system and it cannot be applied to a TV which does not have a V-chip.

An object of the invention is to solve at least the above problems and/or disadvantages and to provide at least the advantages described hereinafter.

To achieve at least these objects and other advantages and in accordance with the purpose of the invention, as embodied and broadly described herein, an apparatus for controlling broadcast channel access in a video display according to an embodiment of the invention is provided that includes at least one user input unit configured for presetting one or more viewable-channel numbers and turning on/off a broadcast channel access mode of the video display, a memory configured to store the preset viewable channel numbers, a controller configured to output a channel selection control signal for selecting only the stored channel numbers when a broadcast channel access mode is turned on, and a channel selector configured for selecting only a required channel out of currently-received broadcast channels according to the channel selection control signal.

To further achieve at least these objects and other advantages and in accordance with the purpose of the invention, as embodied and broadly described herein, a method for controlling broadcast channel access in a broadcast channel access control apparatus having at least one user input unit according to an embodiment of the invention is provided. The method includes displaying a channel access control window when a setup button of the at least one user input unit is pressed, displaying a new password input message when a password change item of the displayed channel access control window is selected, displaying a new password re-input message upon completion of input of the new password, when the new password is completely re-input, storing the re-input new password and displaying a password storage completion message, and closing the channel access control window when the setup button is pressed again.

To further achieve at least these objects and other advantages and in accordance with the purpose of the invention, as embodied and broadly described herein, a method for controlling broadcast channel access in a broadcast channel access control apparatus having at least one user input unit according to an embodiment of the invention is provided. The method includes displaying a password input message when a setup button of the at least one user input unit is pressed, when a password is completely input, determining whether or not the input password is equal to a pre-stored password, displaying a channel access control window if the input password is equal to a pre-stored password, when a desired program item number of the channel access control window is selected, an accessible-channel number for the selected program item number is selected, and the setup button is pressed again, storing the selected program item and the selected channel number and then closing the channel access control window, and displaying an accessible-channel setup completion message.

To further achieve at least these objects and other advantages and in accordance with the purpose of the invention, as embodied and broadly described herein, a method for controlling broadcast channel access in a broadcast channel access control apparatus having at least one user input unit according to an embodiment of the invention is provided. The method includes displaying a channel access control mode setup message when a channel access control mode on/off button of the at least one user input unit is pressed, determining whether or not a currently-selected channel corresponds to one of pre-stored accessible channels, and maintaining the currently-selected channel if the currently-selected channel corresponds to one of the pre-stored accessible channels.

To further achieve at least these objects and other advantages and in accordance with the purpose of the invention, as embodied and broadly described herein, a method for controlling broadcast channel access in a broadcast channel access control apparatus having at least one user input unit according to an embodiment of the invention is provided. The method includes displaying a password input message when a channel access control mode on/off button of the at least one user input unit is pressed, when a password is input, determining whether or not the input password is equal to a pre-stored password, releasing a channel access control mode if the input password is equal to a pre-stored password, and displaying a channel access control mode release message.

To further achieve at least these objects and other advantages and in accordance with the purpose of the invention, as embodied and broadly described herein, a method for controlling broadcast channel access in a video display according to an embodiment of the invention is provided. The method includes determining whether or not the video display is turned on, selecting and displaying one of viewable channels if the video display is turned on, determining whether or not a channel is changed, determining whether or not a current mode is a channel access lock mode if a currently-displayed channel is changed, if a current mode is the channel access lock mode, selecting one of pre-stored accessible channels, and displaying a video of the selected channel.

To further achieve at least these objects and other advantages and in accordance with the purpose of the invention, as embodied and broadly described herein, an apparatus for controlling broadcast channel access in a video display according to an embodiment of the invention is provided that includes a first user input unit configured to control functions of the video display, a second input unit configured for presetting some or all functions of the first user input unit and turning on/off a control mode of the first user input unit, a memory configured to store some or all functions of the first user input unit, a controller configured to output a function selection control signal for selecting only the stored functions of the first user input unit when the control mode of the first user input unit is turned on, and a channel selector configured for selecting only a required channel out of currently-received broadcast channels according to the channel selection control signal.

To further achieve at least these objects and other advantages and in accordance with the purpose of the invention, as embodied and broadly described herein, a method for controlling broadcast channel access in a broadcast channel access control apparatus having a first user input unit and a second user input unit according to an embodiment of the invention is provided that includes displaying a function control window for the second user input unit when a setup button of the first user input unit is pressed, displaying a new password input message when a password change item of the function control window is selected, displaying a password re-input message when the new password is completely input, when the new password is completely re-input, storing the re-input new password and displaying a password storage completion message, and closing the function control window when the setup button is pressed again.

To further achieve at least these objects and other advantages and in accordance with the purpose of the invention, as embodied and broadly described herein, a method for controlling broadcast channel access in a broadcast channel access control apparatus having a first user input unit and a second user input unit according to an embodiment of the invention is provided that includes displaying a password input message when a setup button of the first user input unit is pressed, when a password is completely input, determining whether or not the input password is equal to a pre-stored password, displaying a function control window for the second user input unit if the input password is equal to a pre-stored password, when a desired program item number of the channel access control window is selected, a desired setup state of a corresponding function item is selected and the setup button is pressed, storing the selected setup state and then closing the function control window, and displaying a function setup completion message for the second user input unit.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

The invention will be described in detail with reference to the following drawings in which like reference numerals refer to like elements and wherein:
FIG. 1 is a block diagram of a broadcast channel access control apparatus according to an embodiment of the invention;
FIG. 2A is a schematic front view of an example of a first user input unit according to an embodiment of the invention;
FIG. 2B is a schematic front view of an example of a second user input unit according to an embodiment of the invention;
FIG. 2C is a schematic front view of an example of a combined user input unit according to an embodiment of the invention;
FIG. 2D is a schematic view of a mobile telephone incorporating a first user input unit according to an embodiment of the invention;
FIGs. 3A through 3D are diagrams illustrating a channel access control window and a message window for changing a password for a channel access control mode according to embodiments of the invention;
FIGs. 4A and 4B are diagrams illustrating a channel access control window and a message window for setting a channel for a channel access control mode according to embodiments of the invention;
FIG. 5 is a diagram illustrating a message for setting a channel access control mode according to embodiments of the invention;
FIGs. 6A and 6B are diagrams illustrating messages for releasing a channel access control mode according to embodiments of the invention;
FIG. 7A is a flowchart of a method for changing a password for a channel access control mode according to an embodiment of the invention;
FIG. 7B is a flowchart of a method for setting a channel for a channel access control mode according to an embodiment of the invention;
FIG. 8A is a flowchart of a method for setting a channel access control mode according to an embodiment of the invention;
FIG. 8B is a flowchart of a method for releasing a channel access control mode according to an embodiment of the invention;
FIG. 9 is a flowchart of a broadcast channel access control method according to an embodiment of the invention;
FIG. 10A is a block diagram of a broadcast channel access control apparatus according to another embodiment of the invention;
FIG. 10B is a schematic front view of an example of a first user input unit according to another embodiment of the invention;
FIG. 11 is a flowchart of a method for changing a password for a function control mode for a second user input unit according to an embodiment of the invention; and
FIG. 12 is a flowchart of a method for setting a function for a second user input unit according to an embodiment of the invention.

Reference will now be made in detail to the embodiments of the invention, examples of which are illustrated in the accompanying drawings. Wherever possible, like reference numbers have been used throughout the drawings to refer to the same or like parts.

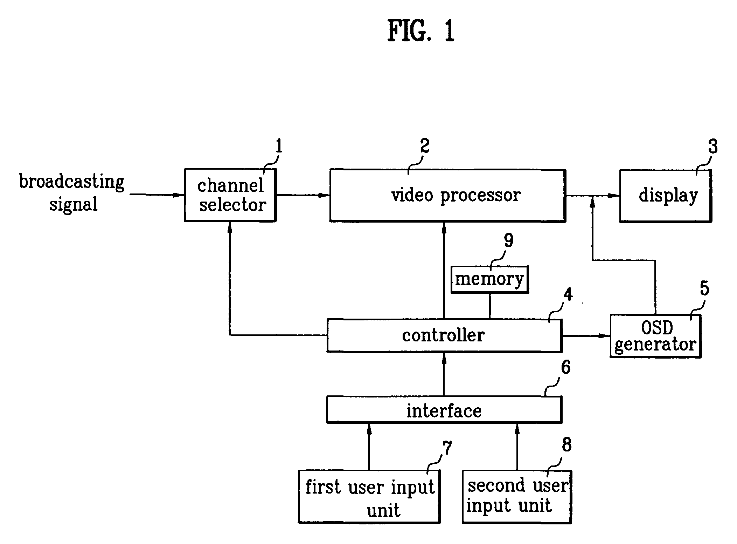

FIG. 1 is a block diagram of a broadcast channel access control apparatus according to an embodiment of the invention. Referring to FIG. 1, the broadcast channel access control apparatus may include a channel selector 1, a video processor 2, a display 3, a controller 4, an on-screen-display (OSD) generator 5, an interface 6, a first user input unit 7, a second user input unit 8, and a memory 9. The first and second user input units 7 and 8 may be infrared remote controllers. The first user input unit 7 may preset one or more viewable-channel numbers and turn on/off a broadcast channel access mode of a video display. The second user input unit 8 may input a channel number required by a viewer.

The first user input unit 7 may be referred to as the parent input unit, while the second user input unit 8 may be referred to as the child input unit. That is, the first user input unit 7 allows, for example, a parent to preset one or more viewable channels and turn on/off a broadcast channel access mode of a video display, such as a TV, while the second user input unit 8 provides functions similar to a conventional video display remote controller. As discussed below, the first user input unit 7 and the second user input unit 8 may be combined as one combined user input unit.

The memory 9 may store the channel numbers preset by the first user input unit 7, and the controller 4 may output a channel selection control signal for selecting only the stored channel numbers when the broadcast channel access mode is turned on. The channel selector 1 may select only a required channel out of currently-received broadcast channels according to the channel selection control signal, and the video processor 2 may process a video signal of the selected channel according to a control signal of the controller 4.

The OSD generator 5 may generate a specific image window according to a control signal of the controller 4, and display the processed image signal and the specific image window on the display 3. The interface 6 may interface the first and second user input units 7 and 8 with the controller 4 so as to transmit input signals applied from the input units 7 and 8 to the controller 4.

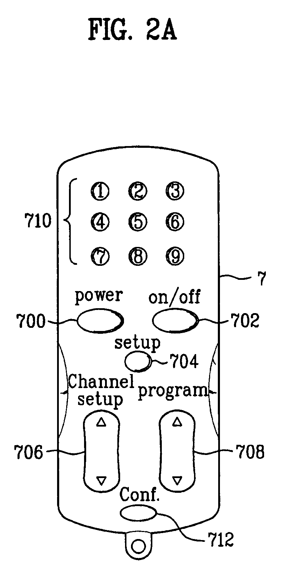

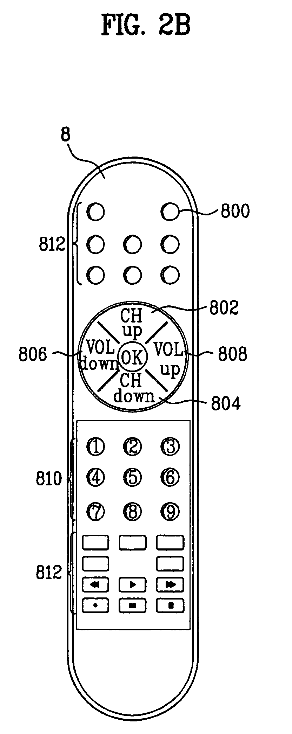

FIG. 2A is a schematic front view of an example of a first user input unit according to an embodiment of the invention. FIG. 2B is a schematic front view of an example of a second user input unit according to an embodiment of the invention. As shown in FIGs. 2A and 2B, the first user input unit 7 may be a dedicated remote controller for broadcast channel access control, and the second input unit 8 may be a general remote controller for channel selection.

Referring to FIG. 2A, the first user input unit 7 may include a power button 700 for applying power to a video display, a mode on/off button 702 for turning on/off a broadcast channel access mode, a setup button 704 for setting one or more viewable broadcast channels respectively to corresponding program items, a channel number change button 706 for changing a channel number, and a program/password change-item selection button 708 for selecting a plurality of program items and a password change item.

The first user input unit 7 may further include a confirmation button 712 linked to an item selected by the program/password change-item selection button, for displaying a new channel input window or a password input window so as to change a channel number or a password of the selected item, and numeric buttons 710 for inputting numbers to the new channel input window or the password input window. When the set up button is pressed, buttons 706 and 708 function as channel button change and program/password change selection buttons. However, when the setup button has not been pressed, buttons 706 and 708 can be used as a channel change button for changing a channel of the currently-displayed video and as a volume control button for controlling the volume of a currently-displayed video, respectively.

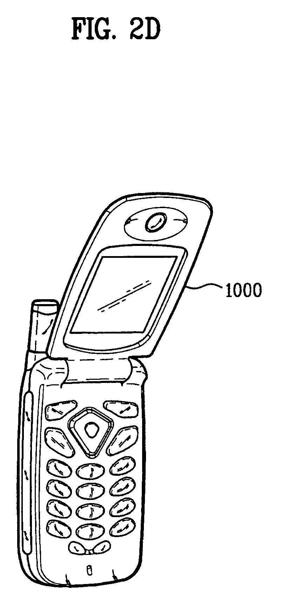

Further, the first user input unit 7 may be configured as part of a mobile unit. For example, the first user input 7 may be configured as a programmable key chain, may be included in a PDA, or may be included as part of a mobile telephone hand set such as the mobile telephone hand set 1000 shown in FIG. 2D. In such a case, the various key functions could be incorporated into the existing keypad or added as additional function keys via updated software, hardware or other equivalent updating means.

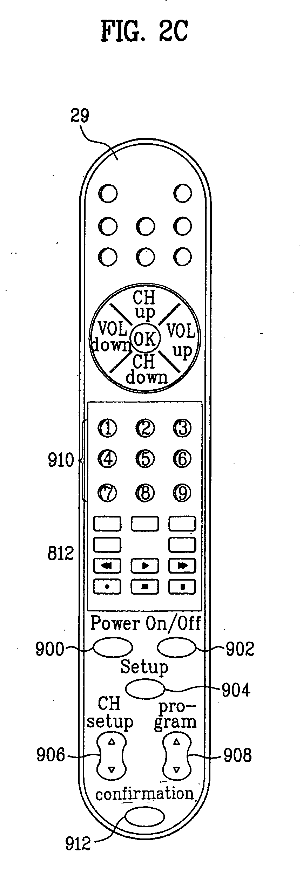

As shown in FIG. 2B, the second user input unit 8 may be a general remote control for channel selection. Such a general remote control may include a power button 800 for applying power to a video display, channel and volume control buttons 802, 804, 806, 808 for selectively controlling channels and volume, a numerical key pad 810, and various other function keys 812. Alternatively, the first user input unit 7 and the second user input unit may be combined into one combined user input unit 29, as shown in FIG. 2C.

A broadcast channel access control method in accordance with an embodiment of the invention using a broadcast channel access control apparatus such as that discussed above will now be described in detail.

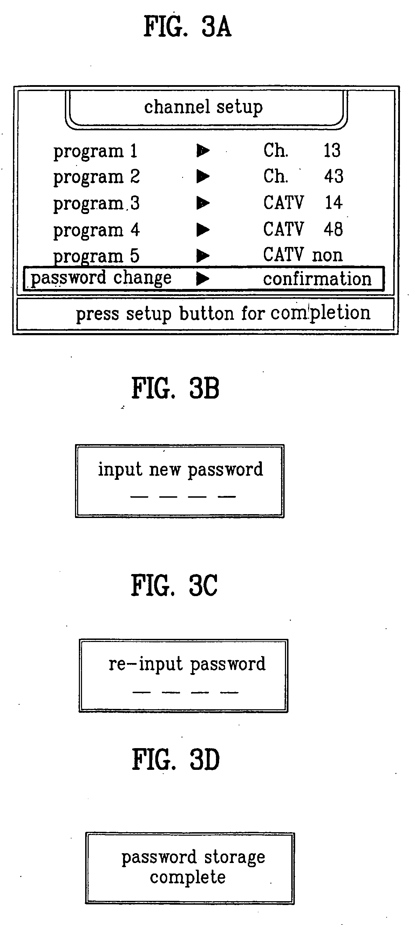

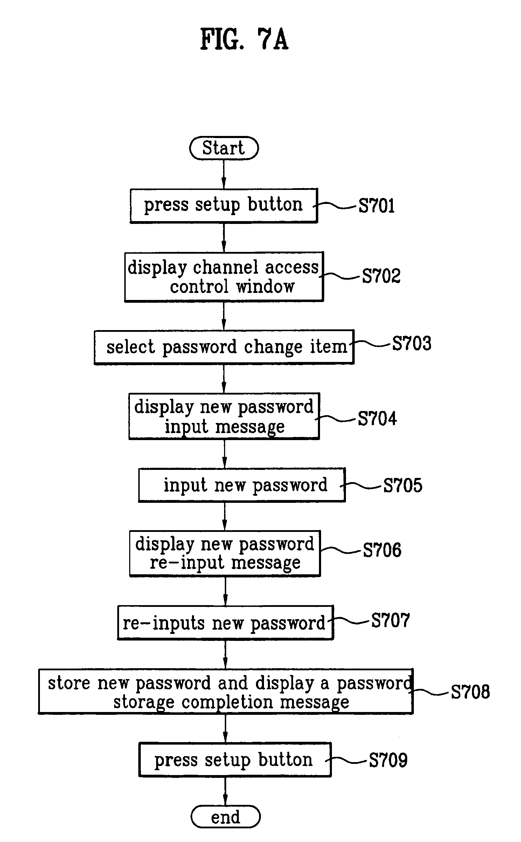

FIGs. 3A through 3D illustrate a channel access control window (or channel setup windows) and a message windows for changing a password for a channel access control mode in accordance with embodiments of the invention. FIG. 7A illustrates a method for changing a password for the channel access control mode in accordance with an embodiment of the invention. The channel access control window and message windows of FIGs. 3A through 3D and the method of FIG. 7A may be utilized, for example, with a broadcast channel access control apparatus such as that shown in FIG. 1.

Referring to FIGs. 3A through 3D and 7A, when a user presses a setup button of the first user input unit, such as the first user input unit 7 of FIG. 1, so as to change a password for a broadcast channel access control mode, in step S701, a controller, such as the controller 4 of FIG. 1, displays a channel access control window as shown in FIG. 3A, in step S702.

Thereafter, when the user selects a password change item of the displayed channel access control window, in step S703, the controller displays a new password input message as shown in FIG. 3B, in step S704. When the user completely inputs the new password, in step S705, the controller displays a password re-input message shown in FIG. 3C, in step S706.

When the user completely re-inputs the new password, in step S707, the controller stores the re-input new password in a memory, such as the memory 9 of FIG. 1, and displays a password storage completion message as shown in FIG. 3D, in step S708. Thereafter, when the user again presses the setup button of the first user input unit, in step S709, the controller closes the channel access control window.

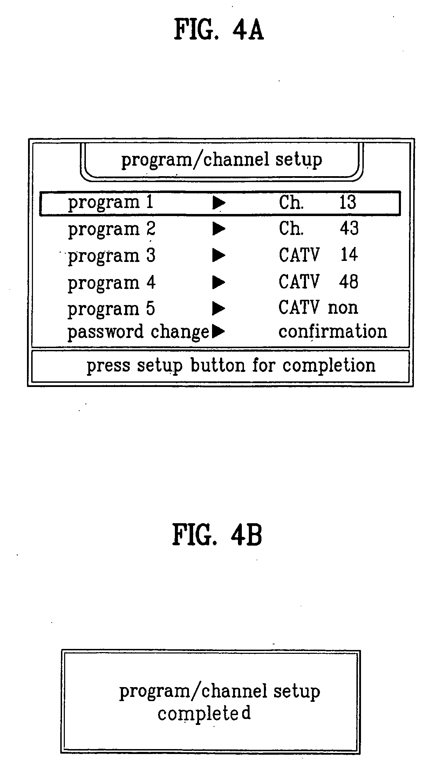

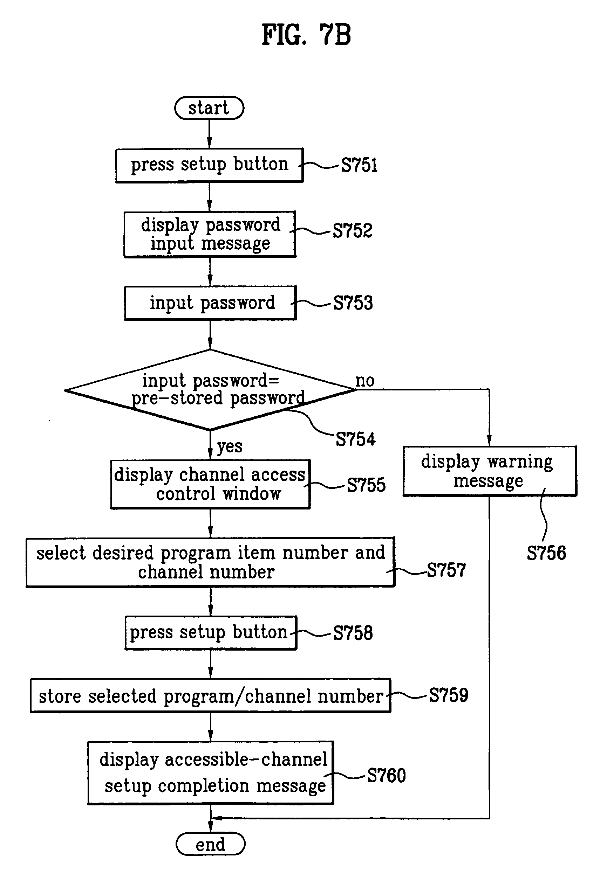

FIGs. 4A and 4B illustrate a channel access control window (or program/channel setup window) and a message window for setting a channel for a channel access control mode in accordance with embodiments of the invention. FIG. 7B illustrates a method for setting the channel for the channel access control mode in accordance with an embodiment of the invention. The channel access control window and message window of FIGs. 4A and 4B and method of FIG. 7B may be utilized, for example, with a broadcast channel access control apparatus such as that shown in FIG. 1.

Referring to FIG. 7B, when a user presses a setup button of a first user input unit, such as the first user input unit 7 of FIG. 1, in step S751, a controller, such as the controller 4 of FIG. 1, displays a password input message, in step S752. When the user completely inputs a password, in step S753, the controller determines whether or not the input password is equal to a pre-stored password, in step S754.

Thereafter, if the input password is equal to a pre-stored password, the controller displays a channel access control window as shown in FIG. 4A, in step S755. Otherwise, if the input password is different from the pre-stored password, the controller displays a warning message, in step S756.

Thereafter, when the user selects a desired program item number of the channel access control window, selects an accessible-channel number (for example, an educational channel number) for the selected program item number, in step S757, and then again presses the setup button, in step S758, the controller stores the selected program item and the selected channel number in a memory, such as the memory 9 of FIG. 1, and then closes the channel access control window, in step S759. Finally, the controller displays an accessible-channel setup completion message as shown in FIG. 4B, in step S760.

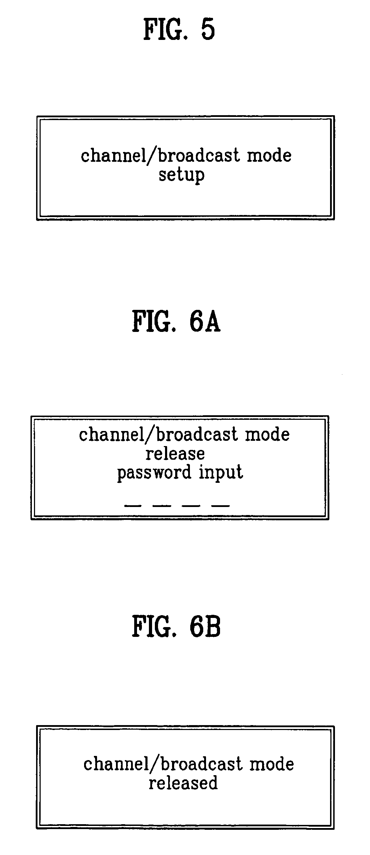

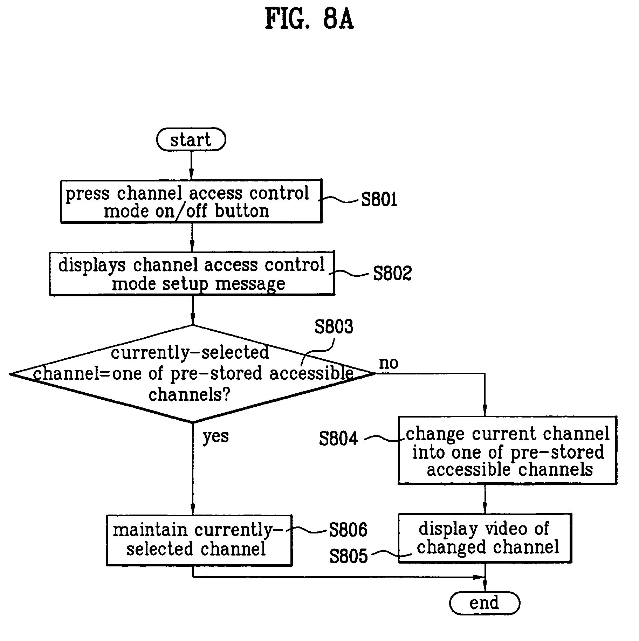

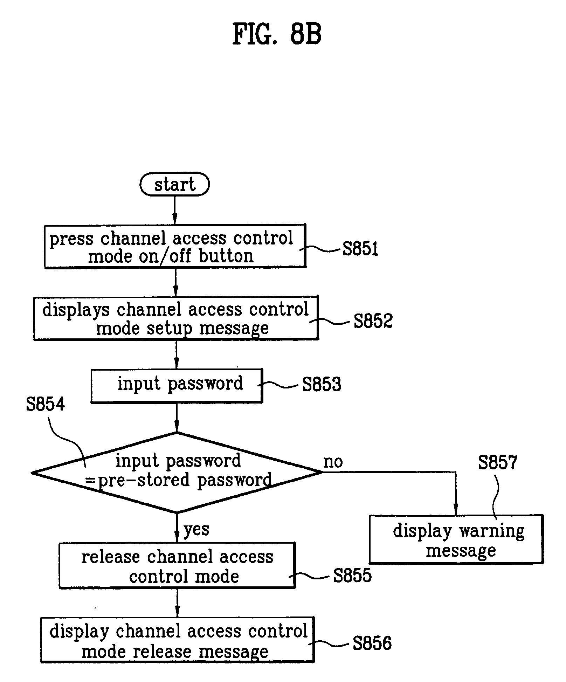

FIG. 5 illustrates a message window for setting a channel access control mode (or channel/broadcast mode set up window) in accordance with an embodiment of the invention. FIG. 8A illustrates a method for setting a channel access control mode in accordance with an embodiment of the invention. The message window of FIG. 5 and method of FIG. 8 may be utilized, for example, with a broadcast channel access control apparatus such as that shown in FIG. 1.

Referring to FIGs. 5 and 8A, when a user presses a channel access control mode on/off button (for example, an educational broadcast mode on/off button) of a first user input unit, such as the first user input unit 7 of FIG. 1, in step S801, a controller, such as the controller 4 of FIG. 1, displays a channel access control mode setup message as shown in FIG. 5, in step S802. Thereafter, the controller determines whether or not a currently-selected channel corresponds to one of pre-stored accessible channels, in step S803. If the currently-selected channel corresponds to one of the pre-stored accessible channels, the controller maintains the currently-selected channel, in step S806. Otherwise, if the currently-selected channel does not correspond to one of the pre-stored accessible channels, the controller changes the currently-selected channel into one of the pre-stored accessible channels, in step S804, and displays a video of the changed channel, in step S805.

FIGs. 6A and 6B illustrate message windows for releasing a channel access control mode (or channel/broadcast mode release windows) in accordance with embodiments of the invention. FIG. 8B illustrates a method for releasing a channel access control mode in accordance with an embodiment of the invention. The message windows of FIGS. 6A and 6B and method of FIG. 8B may be utilized, for example, with a broadcast channel access control apparatus such as that shown in FIG. 1.

Referring to FIGs. 6A, 6B and 8B, when a user presses a channel access control mode on/off button of a first user input unit, such as the first user input unit 7 of FIG. 1, in step S851, a controller, such as the controller 4 of FIG. 1, displays a password input message shown in FIG. 6A, in step S852. Thereafter, when the user completely inputs a password, in step S853, the controller determines whether or not the input password is equal to a pre-stored password, in step S854. If the input password is equal to a pre-stored password, the controller releases a channel access control mode, in step S855. Thereafter, the controller displays a channel access control mode release message as shown in FIG. 6B, in step S856. Otherwise, if the input password is different from the pre-stored password, the controller displays a warning message, in step S857.

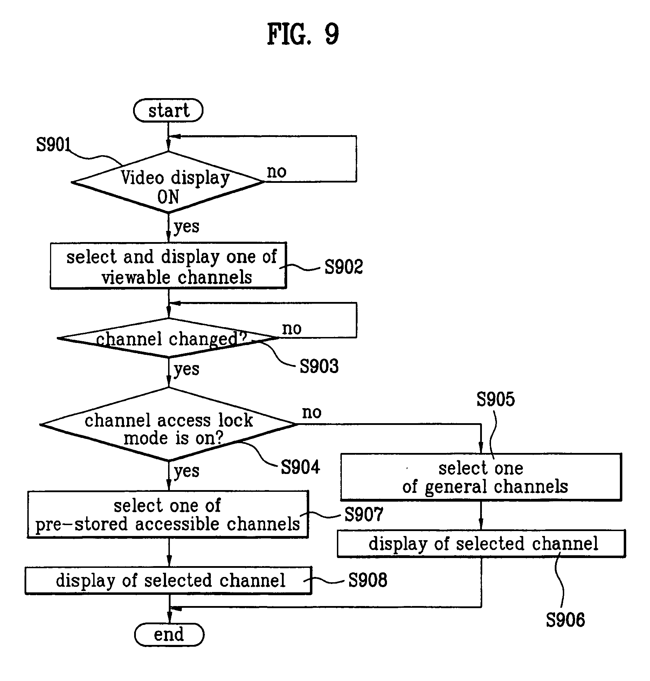

FIG. 9 is a flowchart of a broadcast/channel access control method according to an embodiment of the invention. The method of FIG. 9 may be utilized, for example, with a broadcast channel access control apparatus such as that shown in FIG. 1. Referring to FIG. 9, a controller, such as the controller 4 of FIG. 1, determines whether or not a video display, such as a TV, is turned on, in step S901. If the video display is turned on, the controller selects and displays one of viewable channels, in step S902. Otherwise, if the video display is not turned on, the controller repeats the step of determining whether or not the video display is turned on.

Thereafter, the controller determines whether or not a channel is changed, in step S903. If a currently-displayed channel is changed, the controller determines whether or not a current mode is a channel access lock mode, in step S904. Otherwise, if the currently-displayed channel is not changed, the controller repeats the step of determining whether or not the currently-displayed channel is changed.

If a current mode is the channel access lock mode, the controller selects one of pre-stored accessible channels, in step S907, and displays a video of the selected channel, in step S908. Otherwise, if the current mode is not the channel access lock mode, the controller selects one of general channels, in step S905, and displays the selected channel, in step S906.

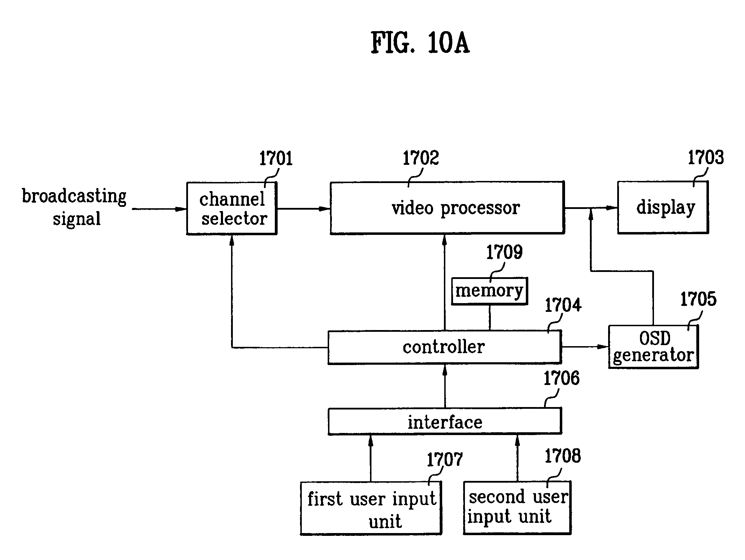

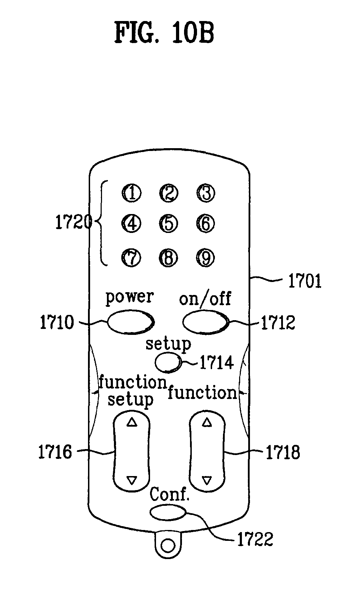

FIG. 10A is a block diagram of a broadcast channel access control apparatus according to another embodiment of the invention will now be described. FIG. 10B is a schematic front view of an example of a first user input unit according to another embodiment of the invention.

Referring to FIG. 10A, the broadcast channel access control apparatus according to an embodiment of the invention may include a channel selector 1701, a video processor 1702, a display 1703, a controller 1704, an on-screen-display (OSD) generator 1705, an interface 1706, a first input unit 1707, a second input unit 1708, and a memory 1709, where the first and second user input units 1707 and 1708 may be infrared remote controllers. The second user input unit 1708 may control functions of a video display, such as a TV, while the first input unit 1707 may preset some or all functions of the second user input unit 1708 and turn on/off a control mode of the second user input unit 1708. The memory 1709 may store some or all functions of the second user input unit 1707, and the controller 1704 may output a function selection control signal for selecting only the stored functions of the second user input unit 1708 when the control mode of the second user input unit 1708 is turned on.

The channel selector 1701 may select only a required channel out of currently-received broadcast channels according to the channel selection control signal. The video processor 1702 may process a video signal of the selected channel according to a control signal of the controller 1704.

The OSD generator 1705 may generate a specific image window according to a control signal of the controller 1704, and display the processed image signal and the specific image window on the display 1703. The interface 1706 may interface the first and second user input units 1707 and 1708 with the controller 1704 so as to transmit input signals applied from the input units 1707 and 1708 to controller 1704.

In this embodiment, the second user input unit 1708 may be a general remote controller similar to the second user input unit 8 of FIG. 2B for selecting a function of the video display, and the first user input unit 1707 may be a dedicated remote controller for controlling the functions of the second user input unit 1708, as shown in FIG. 10B. The first user input unit 1707 may include a power button 1710 for applying power to the video display, a mode on/off button 1712 for turning on/off a control mode of the second user input unit 1708, a setup button 1714 for respectively setting the functions of the second user input unit 1708 to required states, a function setup button 1716 for changing a function, and a function/password change-item selection button 1718 for selecting a password change item and function items of the second user input unit 1708.

The first user input unit 1707 may further include a confirmation button 1722 linked to a item selected by the function/password change-item selection button, for displaying a new number input window or a password input window so as to change a corresponding item number or a password, and numeric buttons 1720 for inputting numbers to the new number input window or the password input window.

A second broadcast channel access control method in accordance with an embodiment of the invention using the broadcast channel access control apparatus such as that discussed above will now be described in detail.

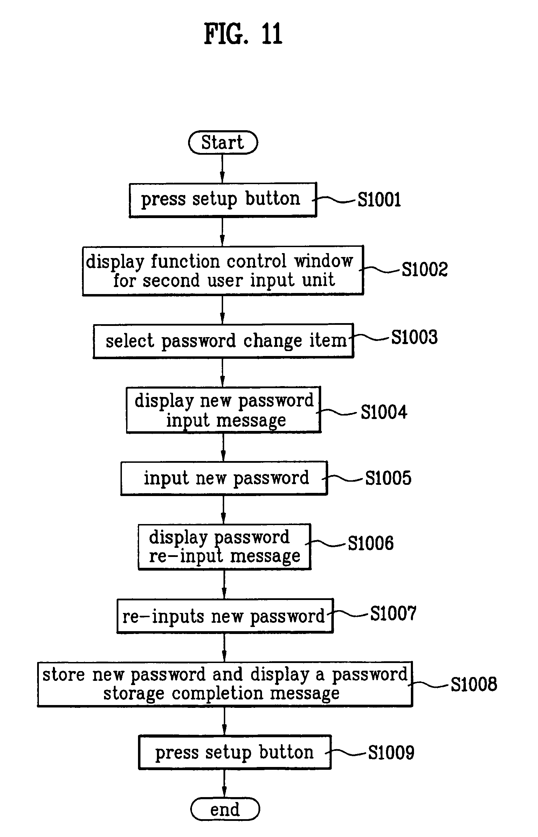

FIG. 11 illustrates a method for changing a password for a function control mode for a second user input unit in accordance with an embodiment of the invention. The method of FIG. 11 may be utilized with, for example, a broadcast access control apparatus such as that shown in FIG. 10A.

Referring to FIG. 11, when a user presses a setup button of a first user input unit, such as the first user input unit 1707 of FIG. 10A, so as to change the password for the function control mode for a second user input unit, such as the second user input unit 1708 of FIG. 10A, in step S1001, a controller, such as the controller 1704 of FIG. 10A, displays a function control window for the second user input unit, in step S1002. Thereafter, when the user selects a password change item of the displayed function control window, in step S1003, the controller displays a new password input message, similar to that shown in FIG. 3B, in step S1004.

When the user completely inputs the new password, in step S1005, the controller displays a password re-input message, in step S1006. When the user completely re-inputs the new password, in step S1007, the controller stores the re-input new password in a memory, such as the memory 1709 of FIG. 10A, and displays a password storage completion message, in step S1008. Thereafter, when the user presses the setup button of the first user input unit, in step S1009, the controller closes the function control window.

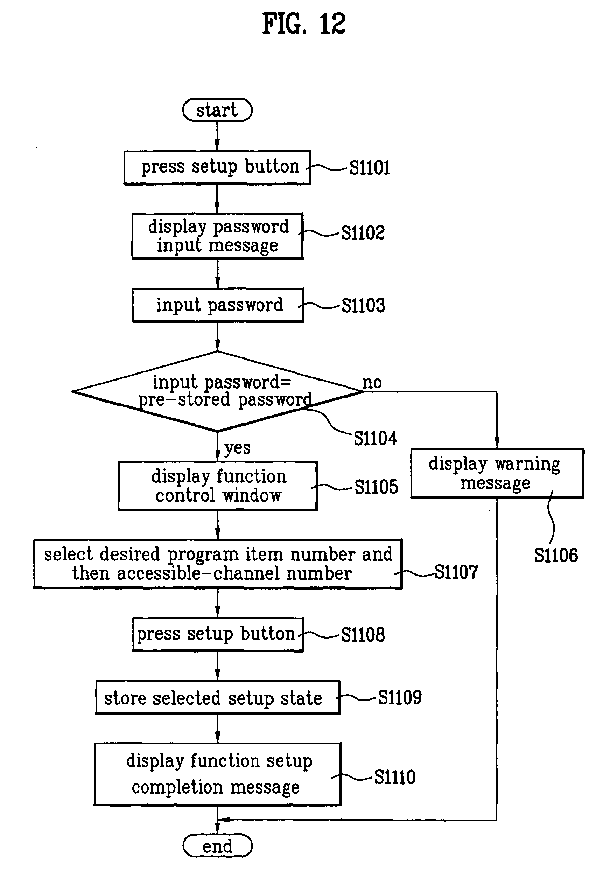

FIG. 12 illustrates a method for setting functions of a second user input unit in accordance with an embodiment of the invention. The method of FIG. 11 may be utilized with, for example, a broadcast access control apparatus such as that shown in FIG. 10A.

Referring to FIG. 12, when a user presses a setup button of a first user input unit, such as the first user input unit 1707 of FIG. 10A, in step S1101, a controller, such as the controller 1704 of FIG. 10A, displays a password input message, in step S1102.

When the user completely inputs a password, in step S1003, the controller determines whether or not the input password is equal to a pre-stored password, in step S1104. Thereafter, if the input password is equal to a pre-stored password, the controller displays the function control window, in step S1105. Otherwise, if the input password is different from the pre-stored password, the controller displays a warning message, in step S1106.

Thereafter, when the user selects a function item of the function control window for the second user input unit, selects a required setup state of a corresponding function item, in step S1107, and then presses the setup button, in step S1108, the controller stores the selected setup state in a memory, such as the memory 1709 of FIG. 10A, and then closes the function control window, in step S1109. Finally, the controller displays a function setup completion message for the second user input unit, in step S1110.

As discussed above, the user can control display of the function control window for the second user input unit using the first user input unit, and can control the functions of the second user input unit using the function control window. Accordingly, by controlling the functions of the second user input unit through the first user input unit, embodiments of the invention can simply control not only the channel access of the video display, but also the power, volume, screen color, and size of the video display, for example.

Also, in certain embodiments of the invention, an interface (such as an infrared receiver), a memory, and a controller may be included in the second user input unit. In such a case, the first user input unit may directly control the second user input unit using a mode on/off button for turning on/off a control mode of the second user input unit and a setup button for setting the functions of the second user input unit respectively to required states. That is, when a user turns on the control mode of the second user input unit using the first user input unit, sets functions for the second user input unit, and stores the set states in the memory of the second user input unit, the controller of the second user input unit can control the functions of the second user input unit according to the set states stored in the memory.

Embodiments of the invention provide a broadcast channel access control apparatus and method capable of simply blocking specific broadcast channels according to a viewer's selection. That is, embodiments of the invention provide a broadcast channel access control apparatus and method capable of completely blocking access to harmful broadcast channels by setting or releasing broadcast channels required to be blocked only through a specific input unit by a specific viewer.

Further, embodiments of the invention may be utilized with a video display, such as a TV, whether or not such video display is provided with V-chip technology.

The foregoing embodiments and advantages are merely exemplary and are not to be construed as limiting the invention. The present teaching can be readily applied to other types of apparatuses. The description of the invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

Summarized, the invention provides an apparatus and methods for controlling broadcast channel access in a video display. The apparatus includes at least one user input unit configured to preset one or more viewable-channel numbers and turn on/off a broadcast channel access mode of the video display, a memory configured to store the preset viewable channel numbers, a controller configured to output a channel selection control signal for selecting only the stored channel numbers when a broadcast channel access mode is turned on, and a channel selector configured for selecting only a required channel out of currently-received broadcast channels according to the channel selection control signal. The apparatus may also include a second user input unit configured to input a required channel number, and a display unit configured to display a video signal of the selected channel.

## Claims

1. An apparatus for controlling broadcast channel access in a video display, the apparatus comprising:
a first user input unit (7) configured for presetting one or more viewable-channel numbers and turning on/off a broadcast channel access mode of the video display (3) ;
a second user input unit (8) configured for inputting a required channel number for channel selection;
a memory configured to store the preset viewable channel numbers;
a controller (4) configured to output a channel selection control signal for selecting only the stored channel numbers when a broadcast channel access mode is turned on; and
a channel selector (1) configured for selecting only a required channel out of currently-received broadcast channels according to the channel selection control signal.

2. The apparatus of claim 1, further comprising:
an interface (6) configured to interface the first (7) and second (8) user input units with the controller (4) so as to transmit input signals applied from the first (7) and second (8) user input units to the controller (4) ;
a video processor (2) configured to process a video signal and/or an image signal of the selected channel according to a control signal of the controller (4); and
an on-screen-display (OSD) generator (5) configured to generate a specific image window according to a control signal of the controller (4) and display the processed video signal or the processed image signal, respectively, and display the specific image window on the display unit (3).

3. The apparatus of claim 1 or 2, wherein the first user input unit (7) comprises:
a mode on/off button (702) configured for turning on/off the broadcast channel access mode;
a setup button (704) configured for setting the one or more viewable broadcast channels respectively to corresponding program items;
a channel number change button (706) configured for changing a channel number; and
a program/password change-item selection button (708) configured for selecting a plurality of program items and a password change item.

4. The apparatus of claim 3, wherein the first user input unit (7) further comprises:
a confirmation button (712) linked to an item selected by the program/password change-item selection button (708), and configured to display a new channel input window or a password input window so as to change a channel number or a password of the selected item; and
buttons (710) configured for inputting numbers and/or characters to the new channel input window or the password input window.

5. The apparatus of claim 4, wherein the channel number change button (706) is used as a volume control button for controlling the volume of a currently-displayed video, before the setup button (704) is pressed.

6. The apparatus of one of claims 3 to 5, wherein the program/password number change-item selection button (708) is used as a channel change button (706) for changing a channel of a currently-displayed video, before the setup button (704) is pressed.

7. The apparatus of one of claims 1 to 6, wherein the first user input unit (7) is an infrared remote controller and/or wherein the second user input unit (8) is an infrared remote controller.

8. The apparatus of one of claims 1 to 7, wherein the first user input unit (7) comprises a mobile key chain.

9. An apparatus for controlling broadcast channel access in a video display, in particular the apparatus of one of claims 1 to 8, the apparatus comprising:
a first user input unit (7) configured to control functions of the video display (3);
a second input unit configured for presetting some or all functions of the first user input unit (7) and turning on/off a control mode of the first user input unit (7) ;
a memory configured to store some or all functions of the first user input unit (7);
a controller (4) configured to output a function selection control signal or a channel selection control signal for selecting only the stored functions of the first user input unit (7) when the control mode of the first user input unit (7) is turned on; and
a channel selector (1) configured for selecting only a required channel out of currently-received broadcast channels according to the function selection control signal or channel selection control signal, respectively.

10. A method for controlling broadcast channel access in a broadcast channel access control apparatus, in particular in the apparatus of one of claims 1 to 9, the apparatus having at least one user input unit, the method comprising:
displaying a password input message when a setup button (704) of the at least one user input unit is pressed;
when a password is completely input, determining whether or not the input password is equal to a pre-stored password;
displaying a channel access control window if the input password is equal to a pre-stored password;
when a desired program item number of the channel access control window is selected, an accessible-channel number for the selected program item number is selected and the setup button (704) is pressed again, storing the selected program item and the selected channel number and then closing the channel access control window; and
displaying an accessible-channel setup completion message.

11. A method for controlling broadcast channel access in a broadcast channel access control apparatus, in particular in the apparatus of one of claims 1 to 9 and/or in combination with the method of claim 10, the apparatus having at least one user input unit, the method comprising:
displaying a password input message when a channel access control mode on/off button (702) of the at least one user input unit is pressed;
when a password is input, determining whether or not the input password is equal to a pre-stored password;
releasing a channel access control mode if the input password is equal to a pre-stored password; and
displaying a channel access control mode release message.

12. The method of claim 10 or 11, wherein a warning message is displayed if the input password is different from the pre-stored password.

13. A method for controlling broadcast channel access in a broadcast channel access control apparatus, in particular in the apparatus of one of claims 1 to 9 and/or in combination with one of the methods of claims 10 to 12, the apparatus having at least one user input unit, the method comprising:
displaying a channel access control mode setup message when a channel access control mode on/off button (702) of the at least one user input unit is pressed;
determining whether or not a currently-selected channel corresponds to one of pre-stored accessible channels; and
maintaining the currently-selected channel if the currently-selected channel corresponds to one of the pre-stored accessible channels.

14. The method of claim 13, further comprising:
changing the currently-selected channel into one of the pre-stored accessible channels unless the currently-selected channel corresponds to one of the pre-stored accessible channels; and
displaying a video of the changed channel.

15. A method for controlling broadcast channel access in a video display, in particular in the apparatus of one of claims 1 to 9 and/or in combination with one of the methods of claims 10 to 14, the method comprising:
determining whether or not the video display (3) is turned on;
selecting and displaying one of viewable channels if the video display (3) is turned on;
determining whether or not a channel is changed;
determining whether or not a current mode is a channel access lock mode if a currently-displayed channel is changed;
if a current mode is the channel access lock mode, selecting one of pre-stored accessible channels; and
displaying a video of the selected channel.

16. The method of claim 15, wherein determining whether or not the video display (3) is turned on is repeated unless the video display (3) is turned on.

17. The method of claim 15 or 16, wherein determining whether or not the currently-displayed channel is changed is repeated unless the currently-displayed channel is changed.

18. The method of one of claims 15 to 17, further comprising:
if the current mode is not the channel access lock mode, selecting one of general channels; and
displaying a video of the selected channel.
